# EUROPÄISCHE PATENTSCHRIFT

(11) **EP 4 615 910 B1**
(45) Veröffentlichungstag und Bekanntmachung des Hinweises auf die Patenterteilung: **02.12.2026**
(21) Anmeldenummer: 23789554.5
(22) Anmeldetag: 10.10.2023
(51) Int. Cl.: B29C 64/153, B29C 64/314, B33Y 40/10, B33Y 70/10, B33Y 10/00, B33Y 30/00, B33Y 80/00

(54) **GROBES FLAMMSCHUTZMITTEL**
COARSE FLAME RETARDANT
AGENT IGNIFUGEANT PARTICULAIRE GROSSIER

(30) Priorität: 08.11.2022 DE 102022129476
(43) Veröffentlichungstag der Anmeldung: 17.09.2025
(73) Patentinhaber: EOS GmbH Electro Optical Systems, 82152 Krailling (DE)
(72) Erfinder: PFISTERER, Heiko, 82275 Emmering (DE); HOTTER, Andreas, 83022 Rosenheim (DE); FREIHART, Karl, 82210 Germering (DE)
(74) Vertreter: Meissner Bolte Partnerschaft mbB
(86) Internationale Anmeldenummer: PCT/EP2023/078027
(87) Internationale Veröffentlichungsnummer: WO 2024/099664

(56) Entgegenhaltungen:
- EP-A1- 3 744 724
- DE-A1- 102004 001 324
- NABALTEC: "Apyral Aluminiumhydroxid - Apyral 2E", 22 October 2018 (2018-10-22), pages 1 - 2, XP093112265, Retrieved from the Internet <URL:https://nabaltec.de/produkte/produktfinder/> [retrieved on 20231214]
- NABALTEC: "Apyral Aluminiumhydroxide - Apyral 1E", 16 October 2018 (2018-10-16), pages 1 - 2, XP093112261, Retrieved from the Internet <URL:https://nabaltec.de/produkte/produktfinder/> [retrieved on 20231214]
- SCHNEIDER KEVIN ET AL: "Flame-Retardant Polyamide Powder for Laser Sintering: Powder Characterization, Processing Behavior and Component Properties", POLYMERS, vol. 12, no. 8, 29 July 2020 (2020-07-29), CH, pages 1697, XP093119268, ISSN: 2073-4360, DOI: 10.3390/polym12081697

## Beschreibung

Die Erfindung betrifft eine Mischung, umfassend mindestens ein polymerbasiertes Material in Pulverform und mindestens ein halogenfreies Flammschutzmittel in Pulverform, ein Verfahren zur Herstellung einer solchen Mischung, die Verwendung einer solchen Mischung als Baumaterial für die additive Fertigung eines dreidimensionalen Objekts, ein dreidimensionales Objekt, hergestellt durch Verfestigen dieser Mischung sowie ein Verfahren und ein System zur Herstellung eines solchen dreidimensionalen Objekts.

### Stand der Technik

Das Produktdatenblatt zu "Apyral Aluminiumhydroxid - Apyral 2E" von Nabaltec vom 22. Oktober 2018 offenbart ein Aluminiumhydroxid als mineralisches Flammschutzmittel.

Das Produktdatenblatt zu "Apyral Aluminiumhydroxid - Apyral 1E" von Nabaltec vom 16. Oktober 2018 offenbart ein weiteres Aluminiumhydroxid als mineralisches Flammschutzmittel.

EP 3 744 724 A1 offenbart ein Aluminiumaminotrimethylenphosphonat sowie ein Verfahren zu dessen Herstellung und dessen Verwendung.

In der Publikation Schneider K., et al. POLYMERS, Bd, 12, Nr. 8, 29. Juli 2020 wird die Bereitstellung von pulverförmigen flammgeschützen Polyamidzusammensetzungen für die Herstellung von dreidimensionalen Objekten mittels Lasersintern offenbart.

Verfahren zur Herstellung eines dreidimensionalen Objekts durch selektives schichtweises Verfestigen eines pulverförmigen Materials werden beispielsweise beim Rapid Prototyping, Rapid Tooling und Additive Manufacturing angewandt und sind beispielsweise als "Laser-Sintern" oder "selektives Laserschmelzen" bekannt. Dabei wird wiederholt eine dünne Schicht eines pulverförmigen Materials innerhalb eines Baufelds aufgebracht und das pulverförmige Material in jeder Schicht durch selektives Bestrahlen mit einem Laserstrahl selektiv verfestigt, das heißt, pulverförmiges Material wird an diesen Stellen an- bzw. aufgeschmolzen und erstarrt unter Bildung eines Materialverbunds. Auf diese Weise entsteht ein dreidimensionales Objekt. Dabei wird häufig polymerbasiertes Material in Pulverform, insbesondere ein thermoplastisches Polymer in Pulverform, als Baumaterial eingesetzt.

Für verschiedenste Anwendungen solcher gemäß dem vorstehend geschilderten Verfahren hergestellten dreidimensionalen Objekte ist es bevorzugt oder gar essenziell, dass diese dreidimensionalen Objekte einen gewissen Flamm- bzw. Brandschutz aufweisen. Dazu wird dem polymerbasierten Material in Pulverform in der Regel ein Flammschutzmittel in Pulverform beigemischt und diese Mischung als Baustoff für das dreidimensionale Objekt eingesetzt.

Der Einsatz solcher Flammschutzmittel verleiht dem erhaltenen dreidimensionalen Objekt zwar den gewünschten Flammschutz ist jedoch auch mit einigen Nachteilen verbunden.

So muss die Zersetzungstemperatur der flammhemmenden Additive unterhalb derer des Matrixwerkstoffes liegen. Werden nun wirtschaftliche Belichtungsstrategien/-energieeinträge in den Laser-Sinter-Prozessen verwendet, resultiert dies häufig in einer starken Rauchbildung und einer zumindest teilweisen Deaktivierung des verarbeiteten flammhemmenden Additivs.

Ferner können die häufig feindispersen Additive als Kristallisationskeime wirken und damit weisen die flammgeschützten erhaltenen dreidimensionalen Objekte als Folge eine andere Kristallinität und dadurch stärkeren Verzug oder sprödere mechanische Eigenschaften auf.

Ebenfalls unvorteilhaft ist es, dass die Reaktivität der eingesetzten flammhemmenden Additive auch im unversinterten Pulver einen stärkeren Molmassenaufbau induzieren oder eine hochviskose Hülle um die Polymerpartikel bilden und dadurch das Verfließen verhindern.

Vor dem Hintergrund des vorstehend geschilderten Standes der Technik besteht ein Bedarf an einer Mischung, umfassend mindestens ein polymerbasiertes Material in Pulverform und mindestens ein Flammschutzmittel in Pulverform, die die vorstehend ausgeführten Nachteile, die auf den Zusatz des Flammschutzmittels in Pulverform zurückzuführen sind, beheben kann.

Die vorliegende Erfindung befasst sich mit diesem Bedarf.

### Beschreibung der Erfindung

In den dieser Anmeldung zugrundeliegenden Untersuchungen wurde überraschend gefunden, dass die vorstehend geschilderten Nachteile des Standes der Technik überwunden werden können. Konkret überwunden werden die vorstehend geschilderten Nachteile des Standes der Technik durch eine Mischung gemäß Anspruch 1, ein Verfahren zur Herstellung einer solchen Mischung gemäß Anspruch 8, , durch ein dreidimensionales Objekt, hergestellt durch Verfestigen dieser Mischung gemäß Anspruch 11, durch ein Verfahren und ein System zur System zur Verfestigung dieser Mischung gemäß den Ansprüchen 12 und 13 und durch die Verwendung einer solchen Mischung als Baumaterial für die additive Fertigung eines dreidimensionalen Objekts gemäß Anspruch 15.

Im Zusammenhang mit den genannten Aspekten der Erfindung wird darauf hingewiesen, dass jede bevorzugte Ausführungsform, die für einen Aspekt beschrieben wurde, auch als bevorzugte Ausführungsform für die anderen Aspekte gilt, selbst wenn die Kombination aus Gründen der Übersichtlichkeit nicht ausdrücklich beschrieben wurde. Darüber hinaus gilt jede Kombination von mehr oder weniger bevorzugten Ausführungsformen eines Aspekts als beschrieben, ebenso wie jede Kombination von mehr oder weniger bevorzugten Ausführungsformen eines Aspekts mit einem anderen Aspekt.

Im Zusammenhang mit der vorliegenden Erfindung haben die Begriffe "umfassend" oder "enthaltend" und ihre grammatikalischen Modifikationen die folgenden Bedeutungen: In einer Ausführungsform können zusätzlich zu den genannten Elementen weitere Elemente enthalten sein. In einer anderen Ausführungsform sind im Wesentlichen nur die genannten Elemente enthalten. Mit anderen Worten, zusätzlich zu ihrer herkömmlichen Bedeutung können die Begriffe in einer bestimmten Ausführungsform synonym mit den Begriffen "im Wesentlichen bestehend aus" oder "bestehend aus" verwendet werden.

Gemäß einem ersten Aspekt betrifft die vorliegende Erfindung demzufolge eine Mischung, umfassend mindestens ein polymerbasiertes Material in Pulverform und mindestens ein halogenfreies Flammschutzmittel in Pulverform, wobei das Flammschutzmittel in Pulverform eine Partikelgrößenverteilung mit einem d50 im Bereich von 20 bis 80 µm, bevorzugt von mindestens 30 und/oder höchstens 60 µm, und einem d10 von größer als 10 µm, bevorzugt größer als 15 µm, noch mehr bevorzugt größer als 20 µm aufweist.

Die Partikelgrößenverteilung wird mittels Laserbeugung, gemäß ISO 13320:2020, bestimmt.

Alternativ kann die Partikelgrößenverteilung auch mittels dynamischer (gemäß ISO 13322-2:2021) oder statischer Bildanalyse (gemäß ISO 13322-1:2014) bestimmt werden.

Das polymerbasierte Material in Pulverform ist im Wesentlichen nicht beschränkt, umfasst jedoch vorzugsweise mindestens ein thermoplastisches Polymer in Pulverform.

In einer Ausführungsform besteht das polymerbasierte Material in Pulverform zum größten Teil aus Polymer, z. B. beträgt der Polymergehalt in dem polymerbasierten Material in Pulverform vorzugsweise mindestens 85 Gew.-%, noch bevorzugter mindestens 90 Gew.-% und noch bevorzugter mindestens 95 Gew.-% oder mehr als 99 Gew.-%.

In einer Ausführungsform besteht das polymerbasierte Material in Pulverform in Gänze aus Polymer.

In einer Ausführungsform weist das polymerbasierte Material in Pulverform eine Partikelgrößenverteilung mit einem d50 im Bereich von 5 bis 200 µm, bevorzugt 20 bis 80 µm, noch mehr bevorzugt von mindestens 30 und/oder höchstens 60 µm auf.

In einer Ausführungsform weist das polymerbasierte Material in Pulverform eine Partikelgrößenverteilung mit einem d10 von größer als 10 µm, bevorzugt größer als 15 µm, noch mehr bevorzugt größer als 20 µm auf.

In einer Ausführungsform weist das polymerbasierte Material in Pulverform eine Partikelgrößenverteilung mit einem d50 im Bereich von 20 bis 80 µm, bevorzugt von mindestens 30 und/oder höchstens 60 µm und mit einem d10 von größer als 10 µm, bevorzugt größer als 15 µm, noch mehr bevorzugt größer als 20 µm auf.

Die Schüttdichte des polymerbasierten Materials in Pulverform beträgt vorzugsweise 300 bis 800 kg/m³, insbesondere von 400 bis 600 kg/m³.

In einer Ausführungsform weist das Flammschutzmittel in Pulverform einen Feinanteil, ermittelt als Mengenanteil von Partikeln mit einer Partikelgröße von kleiner als 10 µm, von weniger als 10 %, bevorzugt weniger als 8 %, insbesondere bevorzugt weniger als 5 % auf.

In einer Ausführungsform weist das Flammschutzmittel in Pulverform eine Partikelgrößenverteilung mit einem d90 von kleiner als 200µm, bevorzugt kleiner als 100 µm, noch mehr bevorzugt kleiner als 80 µm auf.

In einer Ausführungsform weist das Flammschutzmittel in Pulverform eine absolute Verteilungsbreite (d90-d10) von kleiner als 90 µm, bevorzugt kleiner als 60 µm auf.

In einer Ausführungsform weist das Flammschutzmittel in Pulverform eine gewichtete Verteilungsbreite ((d90-d10)/d50) von kleiner 4,5, vorzugsweise von kleiner 3, besonders bevorzugt kleiner 2 und noch mehr bevorzugt kleiner 1 auf.

In einer Ausführungsform umfasst das Flammschutzmittel in Pulverform ein phosphorbasiertes Flammschutzmittel, insbesondere ein phosphinhaltiges, phosphinoxidhaltiges, phospinathaltiges, phosphonathaltiges, phosphithaltiges, phosphathaltiges, phosphoniumhaltiges und/oder polyphosphat-haltiges Flammschutzmittel und/oder ein Flammschutzmittel auf Basis von elementarem roten Phosphor, und/oder dass das Flammschutzmittel in Pulverform ein stickstoffbasiertes Flammschutzmittel, insbesondere Melamine oder Isocyanurate, besonders bevorzugt Melamincyanurat, umfasst, wobei die phosphorbasierten Flammschutzmittel besonders bevorzugt sind.

Es sind auch Mischungen verschiedener der genannten Flammschutzmittel in Pulverform möglich.

Insbesondere bevorzugt sind phospinathaltige Flammschutzmittel umfassend eine Verbindung der allgemeinen Formel I 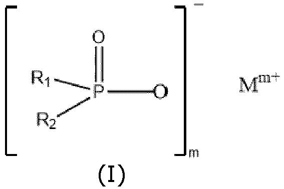 , wobei
R₁ und R₂ unabhängig voneinander ein linearer und/oder verzweigter C₁-C₆-AlkylRest und/oder ein Aryl-Rest sind. Die Reste R₁ und R₂ können unabhängig voneinander substituiert oder nicht substituiert sein.

M ist dabei ein Alkalimetall, ein Erdalkalimetall, ein Übergangsmetall ein Metall und/oder eine protonierte Stickstoffbase.

M ist vorzugsweise ausgewählt aus Mg, Ca, Al, Sb, Sn, Ge, Ti, Fe, Zr, Ce, Bi, Sr, Mn, Li, Na, K und/oder Ammonium.

Vorzugsweise sind R₁ und R₂ jeweils ein Ethyl-Rest.

Vorzugsweise ist M Al.

Der Wert für m ergibt sich aus der Wertigkeit des jeweilig eingesetzten Kations und beträgt üblicherweise 1, 2, 3 oder 4. Es können auch Mischungen verschiedener Kationen enthalten sein.

Insbesondere bevorzugt ist Aluminiumdiethylphosphinat als phospinathaltiges Flammschutzmittel.

In einer anderen Ausführungsform ist das Flammschutzmittel in Pulverform ein polyphosphathaltiges Flammschutzmittel in Pulverform, insbesondere ein Ammoniumpolyphosphat.

In einer anderen Ausführungsform ist das Flammschutzmittel in Pulverform ein phosphonathaltiges Flammschutzmittel in Pulverform.

Zur Einstellung der Partikelgrößenverteilung des Flammschutzmittels in Pulverform kann das das Flammschutzmittel in Pulverform an sich agglomeriert werden. Dadurch können die Größen der einzelnen Partikel vergrößert werden.

Alternativ oder zusätzlich kann das Flammschutzmittel in Pulverform an ein polymeres Material agglomeriert werden. Dieses polymere Material dient dabei vorzugsweise als Binder für das Flammschutzmittel in Pulverform. Das polymere Material kann beispielsweise ein thermoplastisches Polymer, ein duroplastisches Polymer und/oder ein elastomeres Polymer umfassen. Die Bindung mit dem Flammschutzmittel in Pulverform kann dabei beispielsweise durch Erweichen bzw. Schmelzen des polymeren Materials erfolgen. Alternativ kann die Bindung mit dem Flammschutzmittel in Pulverform auch durch Einschluss und/oder Vernetzung erfolgen.

Vorzugsweise handelt es sich bei dem polymeren Material um das Material, dass auch für das polymerbasierte Material in Pulverform in der Mischung eingesetzt wird.

Die Schüttdichte des Flammschutzmittels in Pulverform beträgt vorzugsweise 20 bis 2.000 kg/m³, insbesondere von 300 bis 700 kg/m³.

Flammschutzmittel auf mineralischen Trägern weißen teils eine hohe Dichte und damit hohe Schüttdichten auf. Bevorzugt ist die Dichte (und auch Schüttdichte) des Flammschutzmittels ähnlich der Dichte des Polymerpulvers, um Entmischungseffekte zu vermeiden. Allerdings kann aufgrund der Partikelform des Flammschutzmittels z.B. in Rohform eine geringe Schüttdichte vorliegen, nach Vermischung mit dem Polymerpulver und ggf. Fließhilfsmitteln kann dann die bevorzugte Schüttdichte erzielt werden.

In einer Ausführungsform ist die erfindungsgemäße Mischung dadurch gekennzeichnet, dass das mindestens eine polymerbasierte Material mindestens ein thermoplastisches Polymer umfasst.

Geeignete thermoplastische Polymere sind vorzugsweise ausgewählt aus der Gruppe, umfassend Polyetherimide, Polycarbonate, Polyphenylensulfone, Polyphenylenoxide, Polyethersulfone, Acrylnitril-Butadien-Styrol-Copolymerisate (ABS), Acrylnitril-Styrol-Acrylat-Copolymerisate (ASA), Polyvinylchlorid, Polyacrylate, Polyester, Polyamide, Polyaryletherketone (PAEKs), Polyether, Polyurethane, Polyimide, Polyamidimide, Polysiloxane, Polyolefine sowie Copolymeren, welche mindestens zwei verschiedene Wiederholungseinheiten der vorgenannten Polymere aufweisen, und/oder mindestens ein Polyblend auf der Basis von mindestens zwei der vorgenannten Polymere und/oder Copolymere.

Insbesondere umfasst das mindestens eine thermoplastische Polymer ein Polyamid, insbesondere PA6, PA6.6, PA11, PA12, PA6.13, PA10.12, PA5, PA5.10, ein Polypropylen-Polyethylen-Copolymer, ein thermoplastisches Polyurethan und/oder ein thermoplastisches Polyamid-Elastomer.

In einer Ausführungsform ist die erfindungsgemäße Mischung dadurch gekennzeichnet, dass die Schüttdichte der Mischung von 300 bis 700 kg/m³, bevorzugt von 400 bis 600 kg/m³, insbesondere von 450 bis 550 kg/m³ beträgt.

In einer anderen Ausführungsform ist die erfindungsgemäße Mischung dadurch gekennzeichnet, dass die Mischung eine monomodale Partikelgrößenverteilung aufweist. Dies bedeutet, die Partikelgrößenverteilung von polymerbasiertem Material in Pulverform und des Flammschutzmittels in Pulverform, insbesondere der jeweilige d50, sind im Wesentlichen identisch.

In einer alternativen Ausführungsform weicht der d50 des polymerbasierten Materials in Pulverform um nicht mehr als 25 µm, besonders bevorzugt nicht mehr als 20 µm, insbesondere um nicht mehr als 10 µm von dem d50 des Flammschutzmittels in Pulverform ab (und umgekehrt).

Für die Ausführung der Erfindung ist es ausreichend, wenn die Mischung mindestens ein polymerbasiertes Material in Pulverform und mindestens ein Flammschutzmittel in Pulverform, jeweils wie vorstehend ausgeführt, umfasst. Die Mischung kann jedoch ferner mindestens ein weiteres Additiv umfassen.

Mögliche Additive sind vorzugsweise ausgewählt aus der Gruppe umfassend Thermostabilisatoren, UV-Stabilisatoren, Fließhilfsmittel, Rieselhilfen, Antiagglomerationsmittel, Verfärbungsinhibitoren, Gleitmittel, Nukleierungsmittel, Verdicker, Antioxidantien, Antistatika, Mittel zur Verbesserung der Bioabbaubarkeit oder der Biokompatibilität, Konservierungsmittel, Farbstoffe, Duftstoffe, Hydrolysestabilisatoren, Füllstoffe, Fasern, insbesondere in Form von Glas- oder Kohlenstofffasern, und/oder Weichmachern, Absorber, insbesondere Ruße oder Graphit, welche insbesondere im Wellenlängenbereich der Strahlungsquelle des Verarbeitungssystems absorbieren.

In einem anderen Aspekt betrifft die vorliegende Erfindung ein Verfahren zur Herstellung einer Mischung wie vorstehend beschrieben.

Alle vorstehend beschriebenen Ausführungsformen und Definitionen gelten analog für das erfindungsgemäße Verfahren.

Das erfindungsgemäße Verfahren umfasst das Einstellen einer konkreten Partikelgrößenverteilung mit einem d50 im Bereich von 20 bis 80 µm, bevorzugt von mindestens 30 und/oder höchstens 60 µm, und einem d10 von größer als 10 µm, bevorzugt größer als 15 µm, noch mehr bevorzugt größer als 20 µm in dem Flammschutzmittel in Pulverform und das Mischen dieses Flammschutzmittels in Pulverform mit mindestens einem polymerbasierten Material in Pulverform.

Da kommerziell erhältliche Flammschutzmittel in Pulverform häufig einen zu großen Feinanteil und damit einen zu kleinen d50 aufweisen, ist die Einstellung der konkreten Partikelgrößenverteilung relevant, um die eingangs beschriebenen Nachteile des Standes der Technik zu beheben.

Insbesondere führt der Feinanteil zu einer schlechten Beschichtung beim Pulverauftrag.

Ferner haftet der Feinanteil elektrostatisch oder mechanisch an der Oberfläche der Polymerpartikel, hüllt diese ein und kann dadurch die Ausbreitung/Koaleszenz der Schmelze verhindern.

Die Einstellung der konkreten Partikelgrößenverteilung umfasst vorzugsweise die mechanische Trennung von Partikeln, bzw. das Aussortieren von zu kleinen und/oder zu großen Partikeln.

In einer Ausführungsform umfasst das Einstellen der konkreten Partikelgrößenverteilung in dem Flammschutzmittel in Pulverform das Entfernen von Partikeln, insbesondere durch Klassieren, vorzugsweise durch Sieben, Luftstrahlsiebung und/oder Sichten.

Klassieren und Sieben sind klassische in der mechanischen Verfahrenstechnik eingesetzte Trennverfahren. In der mechanischen Verfahrenstechnik bezeichnet Klassieren das Trennen eines dispersen Feststoffgemisches in Fraktionen, vorzugsweise nach den Kriterien Partikelgröße.

Insbesondere geeignet sind hierbei die nachfolgenden aufgeführten Verfahren.

Siebklassieren; hierbei erfolgt die Trennung nach charakteristischen Längen, bzw. Durchmessern der Partikeln mittels eines Siebbodens, in dem sich viele geometrisch angenähert gleiche Öffnungen befinden. Durch das Anlegen eines Luftstrahls (Luftstrahlsiebung) kann die Siebung beschleunigt werden.

Stromklassieren; hierbei werden unterschiedliche Sinkgeschwindigkeiten bzw. Bewegungsbahnen ausgenutzt, die die Partikel in einem Fluid unter der Wirkung von Feld-, Strömungs- und Trägheitskräften erreichen bzw. zurücklegen.

Die vorstehend genannten Verfahren werden insbesondere angewandt, wenn die Partikelgrößenverteilung eines kommerziell erhältlichen Flammschutzmittels in Pulverform angepasst werden soll.

In einer Ausführungsform ist das erfindungsgemäße Verfahren vorzugsweise dadurch gekennzeichnet, dass das das Einstellen der konkreten Partikelgrößenverteilung in dem Flammschutzmittel in Pulverform einen Schritt umfasst, wobei das Flammschutzmittels in Pulverform an sich selbst agglomeriert wird.

In einer Ausführungsform ist das erfindungsgemäße Verfahren vorzugsweise dadurch gekennzeichnet, dass das Einstellen der konkreten Partikelgrößenverteilung in dem Flammschutzmittel in Pulverform einen Schritt umfasst, wobei das Flammschutzmittels in Pulverform an ein polymeres Material agglomeriert wird.

In einer Ausführungsform ist das erfindungsgemäße Verfahren vorzugsweise dadurch gekennzeichnet, dass das Flammschutzmittel in Pulverform zunächst mit mindestens einem polymeren Material compoundiert und anschließend auf die Zielpartikelgröße mikronisiert wird.

Das polymere Material, das für das Agglomerieren und/oder das Compoundieren eingesetzt wird, dient dabei vorzugsweise als Binder für das Flammschutzmittel in Pulverform. Das polymere Material kann beispielsweise ein thermoplastisches Polymer, ein duroplastisches Polymer und/oder ein elastomeres Polymer umfassen. Die Bindung mit dem Flammschutzmittel in Pulverform kann dabei beispielsweise durch Erweichen bzw. Schmelzen des polymeren Materials erfolgen. Alternativ kann die Bindung mit dem Flammschutzmittel in Pulverform auch durch Einschluss und/oder Vernetzung erfolgen.

Vorzugsweise handelt es sich bei dem polymeren Material um das Material, das auch für das polymerbasierte Material in Pulverform in der Mischung eingesetzt wird.

In einer Ausführungsform ist das erfindungsgemäße Verfahren vorzugsweise dadurch gekennzeichnet, dass das Einstellen der konkreten Partikelgrößenverteilung in dem Flammschutzmittel in Pulverform einen Schritt umfasst, wobei das Flammschutzmittel in Pulverform durch Fällung oder Trocknung aus einer Dispersion oder Lösung agglomeriert wird.

Es ist auch möglich, mehrere der oben genannten Verfahrensschritte zu kombinieren.

Offenbart wird ferner eine nicht erfindungsgemäße Mischung, erhältlich durch die vorstehend beschriebenen Verfahren.

Alle vorstehend beschriebenen Ausführungsformen und Definitionen gelten analog für die nicht erfindungsgemäße Mischung, erhältlich durch das vorstehend beschriebene Verfahren.

In einem anderen Aspekt betrifft die vorliegende Erfindung ein dreidimensionales Objekt, hergestellt durch Verfestigung eines pulverförmigen Baumaterials an Raumpunkten, die dem Querschnitt des dreidimensionalen Objekts in der jeweiligen Schicht entsprechen, durch Bestrahlung, wobei eine Mischung wie vorstehend beschrieben als Baumaterial verwendet wird.

Alle vorstehend beschriebenen Ausführungsformen und Definitionen gelten analog für das dreidimensionale Objekt.

In einem anderen Aspekt betrifft die vorliegende Erfindung ein Verfahren zur Herstellung eines dreidimensionalen Objekts, insbesondere durch Verfestigung eines pulverförmigen Baustoffs an den Punkten, die dem Querschnitt des dreidimensionalen Objekts in der jeweiligen Schicht entsprechen, wobei als Baustoff eine Mischung wie vorstehend beschrieben verwendet wird und vorzugsweise der Baustoff durch Einwirkung von elektromagnetischer Strahlung, die von einer Strahlungsquelle ausgesandt wird, selektiv verfestigt wird.

Alle vorstehend beschriebenen Ausführungsformen und Definitionen gelten analog für das Verfahren zur Herstellung eines dreidimensionalen Objekts.

In einer bevorzugten Ausführungsform handelt es sich bei dem Verfahren um ein herkömmliches Laser-Sinter-Verfahren, das einen CO₂-Laser oder eine Lichtquelle, die kurzwellige Strahlung, wie z.B. NIR-Strahlung, emittiert, verwendet. Dabei wird die Mischung regelmäßig Schicht für Schicht auf eine Unterlage oder Bauplattform aufgebracht und die Stellen, an denen ein späteres Objekt entstehen soll, durch Aktivierung/Schmelzen mit einem Laserstrahl oder einem Satz von zwei oder mehreren Laserstrahlen verfestigt.

In einer anderen Ausführungsform erfolgt die Verfestigung durch Auftragen einer Tinte auf die Teile der Schicht, in der später das Objekt erzeugt werden soll, und durch anschließende Bestrahlung der Oberfläche der Schicht mit einer zweidimensionalen Lichtquelle einer Wellenlänge, die nur von Bestandteilen der Tinte absorbiert wird. Dabei wird die mit der Tinte "markierte" Mischung selektiv aufgeschmolzen und kann anschließend zu einem dreidimensionalen Objekt verfestigt werden. Diese Art von Verfahren wird von der Firma HP als "Multi Jet Fusion" vermarktet.

Wie bereits erwähnt, unterliegt die Wellenlänge der Strahlungsquelle keiner relevanten Einschränkung, sofern sie ein selektives Schmelzen der gewünschten Bereiche der Schicht oder Positionen der Mischung ermöglicht. In einer Ausführungsform ist die Strahlungsquelle ein herkömmlicher CO₂-Laser mit einer Strahlungswellenlänge von etwa 10,6 µm.

In einer anderen Ausführungsform emittiert die Strahlungsquelle elektromagnetische Strahlung einer Wellenlänge im Bereich von 400 bis 1500 nm, vorzugsweise in einem der Wellenlängenbereiche 1.064±8 nm und/oder 980±7 nm und/oder 940±7 nm und/oder 810±7 nm und/oder 780±10 nm und/oder 640±7 nm, oder elektromagnetische Strahlung einer Wellenlänge von etwa 10,6 µm oder im Bereich von 4,8 bis 8,3 µm und vorzugsweise etwa 5 µm.

Die in dem Verfahren zu verwendende Strahlungsquelle umfasst vorzugsweise mindestens einen Laser, vorzugsweise mindestens einen Diodenlaser.

In einem weiteren Aspekt betrifft die vorliegende Erfindung ein System zur Herstellung von dreidimensionalen Objekten durch Verfestigung eines pulverförmigen Baustoffs an den dem Querschnitt des dreidimensionalen Objekts entsprechenden Stellen in der jeweiligen Schicht, wobei das System mindestens eine Strahlungsquelle, die zur Aussendung von elektromagnetischer Strahlung ausgebildet ist, eine als offener Behälter wirkende Prozesskammer, die mit einer Behälterwand ausgebildet ist einen in der Prozesskammer angeordneten Träger, wobei die Prozesskammer und der Träger in vertikaler Richtung relativ zueinander bewegbar sind, mit einem Vorratsbehälter und einem in horizontaler Richtung bewegbaren Beschichter, wobei der Vorratsbehälter zumindest teilweise mit einer Mischung wie vorstehend beschrieben gefüllt ist.

Alle vorstehend beschriebenen Ausführungsformen und Definitionen gelten analog für das System zur Herstellung von dreidimensionalen Objekten.

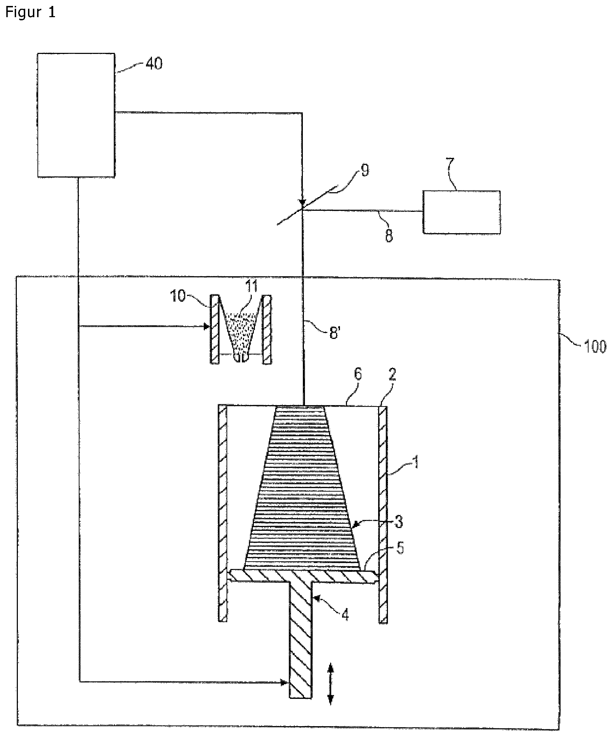

Ein herkömmliches System und Verfahren, das im Rahmen der Erfindung eingesetzt werden kann, ist beispielsweise aus der DE 44 10 046 bekannt, bei dem ein dreidimensionales Objekt durch wiederholtes Auftragen von Pulverschichten, selektives Aufschmelzen (teilweise oder vollständig) auf den jeweiligen Positionen entsprechenden Querschnitt des Objekts und anschließendes Erstarren der Schmelze schichtweise - nach dem Prinzip der "additiven Fertigung" - hergestellt wird. Durch das Schmelzen der Pulverschicht verbindet sich die Schmelze mit der zuvor geschmolzenen Schicht. Ein Beispiel für eine Laser-Sinter-Vorrichtung mit einem Laserstrahl und einem Umlenkspiegel, ist in Figur 1 dargestellt.

Wie in Figur 1 zu sehen ist, besitzt die Vorrichtung einen Behälter 1, der nach oben geöffnet ist und unten durch einen Träger 4 zum Tragen eines zu formenden Objekts 3 begrenzt ist. Durch den oberen Rand 2 des Behälters (oder seine Seitenwände) ist eine Arbeitsebene 6 definiert. Das Objekt befindet sich auf der Oberseite des Trägers 4 und ist aus mehreren Schichten eines pulverförmigen, durch elektromagnetische Strahlung verfestigbaren Baustoffs gebildet und erstreckt sich parallel zur Oberseite des Trägers 4. Der Träger ist in vertikaler Richtung, d.h. parallel zur Seitenwand des Behälters 1, höhenverstellbar. So kann die Position des Trägers 4 relativ zur Arbeitsebene 6 eingestellt werden.

Oberhalb des Behälters 1 bzw. der Arbeitsebene 6 ist eine Auftragseinrichtung 10 zum Auftragen des zu verfestigenden Pulvermaterials 11 auf die Bauplattform 5 oder eine zuletzt verfestigte Schicht vorgesehen. Weiterhin ist oberhalb der Arbeitsebene 6 eine Bestrahlungseinrichtung in Form eines Lasers 7 angeordnet, der einen gerichteten Lichtstrahl 8 aussendet. Dieser wird über eine Ablenkeinrichtung 9, zum Beispiel einen Drehspiegel, als abgelenkter Strahl 8' in Richtung der Bearbeitungsebene 6 gelenkt. Diese Anordnung ist bei einer Laser-Sinter-Anlage mit einem CO₂-Laser üblich. Eine Steuereinheit 40 ermöglicht die Steuerung des Trägers 4, der Applikationseinrichtung 10 und der Ablenkeinrichtung 9. Die Elemente 1 bis 6, 10 und 11 sind innerhalb des Maschinenrahmens 100 angeordnet.

Bei der Herstellung des dreidimensionalen Objekts 3 wird das Pulvermaterial 11 schichtweise auf den Träger 4 oder eine zuvor verfestigte Schicht aufgetragen und mit dem Laserstrahl 8' an den dem Objekt entsprechenden Positionen jeder Pulverschicht verfestigt. Nach jeder selektiven Verfestigung einer Schicht wird der Träger um die Dicke der als nächstes aufzubringenden Pulverschicht abgesenkt.

In dem vorstehend beschriebenen System emittiert die Strahlungsquelle vorzugsweise elektromagnetische Strahlung einer Wellenlänge im Bereich von 400 bis 1.500 nm, vorzugsweise in einem der Wellenlängenbereiche 1.064±8 nm und/oder 980±7 nm und/oder 940±7 nm und/oder 810±7 nm und/oder 780±10 nm und/oder 640±7 nm, oder elektromagnetische Strahlung einer Wellenlänge von etwa 10,6 µm oder im Bereich von 4,8 bis 8,3 µm und vorzugsweise etwa 5 µm.

Die in dem System zu verwendende Strahlungsquelle umfasst vorzugsweise mindestens einen Laser, vorzugsweise mindestens einen Diodenlaser.

Die Laserdioden können zellenförmig oder versetzt angeordnet sein. Darüber hinaus ist es möglich, dass die Laserdioden in einem 2-dimensionalen Array angeordnet sind. Der Emitter kann ein Kantenemitter sein. Bevorzugt ist der Emitter ein Oberflächenemitter (VCSEL oder Philips-VCSEL). Durch Linienbelichtung können hohe Baugeschwindigkeiten erreicht werden. Darüber hinaus ermöglicht der Einsatz von Laserdioden einen hohen Wirkungsgrad und senkt die Energiekosten.

Geeignete Laserdioden arbeiten in der Regel mit einer Leistung zwischen 0,1 und 500 Watt, vorzugsweise mit mindestens 1,0 Watt und/oder höchstens 100 Watt. Der Fokus des Laserstrahls kann einen Radius zwischen 0,05 mm und 1 mm, vorzugsweise von mindestens 0,1 mm und/oder höchstens 0,4 mm haben.

Die Belichtungsgeschwindigkeit, d.h. die Geschwindigkeit des Laserfokus relativ zur Bauwerksebene, liegt in der Regel zwischen 10 mm/s und 20.000 mm/s, vorzugsweise bei mindestens 300 mm/s und/oder höchstens 10.000 mm/s, besonders bevorzugt bei höchstens 6.000 mm/s.

In einem weiteren Aspekt betrifft die vorliegende Erfindung die Verwendung einer Mischung wie vorstehend beschrieben als Baumaterial für die additive Fertigung eines dreidimensionalen Objekts durch selektive Verfestigung eines Baumaterials an den Querschnittspunkten des dreidimensionalen Objekts in den entsprechenden Schichten, insbesondere wie vorstehend beschrieben.

Alle vorstehend beschriebenen Ausführungsformen und Definitionen gelten analog für die erfindungsgemäße Verwendung.

### Beschreibung der Figuren

Figur 1 zeigt ein Beispiel für eine herkömmliche Lasersinteranlage zur schichtweisen Herstellung eines dreidimensionalen Objekts.

Im Folgenden wird die vorliegende Erfindung anhand von Beispielen näher beschrieben, die jedoch nur zur Veranschaulichung dienen und in keiner Weise als Einschränkung der hierin beschriebenen Erfindung zu verstehen sind.

### Beispiele

### Beispiel 1:

Ein kommerziell erhältliches Phosphinat-basiertes Flammschutzmittel des Typs EXOLIT^{®} OP 1400 von Clariant wird mittels Luftstrahlsiebung mit einem Laborsieb SLS 200 der Siebtechnik GmbH mit anschließendem Zyklonabscheider unter Verwendung eines 32 µm Siebes und einem angelegten Unterdruck von 70 - 90 mbar fraktioniert.

Dadurch werden folgende Fraktionen des Flammschutzmittels erhalten:
F1 beschreibt das unfraktionierte Material, F2 beschreibt den Siebrückstand nach der Siebung, F3 beschreibt den aufgefangenen Siebdurchgang nach der Zyklonabscheidung.

Durch die Luftstrahlsiebung werden etwa 30 - 40 % des Aufgabeguts als Siebdurchgang aus dem Aufgabegut entfernt.

Als nicht-erfindungsgemäßes Vergleichsbeispiel wird ein chemisch vergleichbares Flammschutzmittel FN mit deutlich geringeren Partikeldurchmesser, erhältlich als EXOLIT^{®} OP 930 von Clariant verwendet.

Das erhaltene Material wird mittels Laserbeugung nach ISO 13320:2020 unter Verwendung eines Messgeräts CILAS 1064 der Firma Quantachrome Partikelmesstechnik mit einer Nassdispergierzelle in Wasser unter Zugabe eines Dispergiermediums (Tensid) durchgeführt. Bei der Nassdispergierung wird die Probe zusätzlich mit Ultraschall dispergiert. Die Messauswertung der Korngrößenverteilung erfolgt nach dem Fraunhofer-Modell. Die Angabe der Partikelgrößenverteilung erfolgt als d10, d50 und d90, d.h. als 10 %-Quantil, 50 %-Quantil und 90 %-Quantil der volumetrischen Partikelgrößenverteilung. Zusätzlich wird der Feinanteil als Anteil der Partikel mit einem Durchmesser x < 10 µm angegeben. Die Messung wird zur statistischen Mittelwertwert-Bildung mehrfach durchgeführt.

Zusätzlich werden die Schüttdichte in Anlehnung an ISO 60 und die Rieselfähigkeit nach ISO 6186 bei einem Ausflussdüsen-Durchmesser von 15 mm ermittelt.

Die ermittelten Messdaten sind in Tabelle 1 dargestellt.

**Tabelle 1: Flammschutzmittel**

| | Laserbeugung | | | | Schüttdichte |
|---|---|---|---|---|---|
| | x<10 µm [%] | D10 [µm] | D50 [µm] | D90 [µm] | [kg/m³] |
| **F1** | 16,1 | 5,5 | 31,3 | 49,3 | 519 |
| **F2** | 9,9 | 10,3 | 35,5 | 53,3 | |
| **F3** | 39,3 | 1,8 | 14,1 | 28,9 | |
| **FN** | 98,7 | 0,9 | 3,3 | 7,6 | 340 |

Die so erhaltenen Flammschutzmittel F1 und F3 weisen entsprechend nicht die erfindungsgemäß bevorzugten Eigenschaften, insbesondere im Hinblick auf den Gehalt an Feinanteil und die Kombination aus D10 und D50 auf. Lediglich F2 entspricht diesen Anforderungen.

Die so erhaltenen Flammschutzmittel werden zu einem Anteil von 25 % (Massenanteil des Flammschutzmittels an der Masse der Gesamtmischung) mit einem kommerziell erhältlichen Polyamid 12 Feinpulver, VESTOSINT^{®} 1125 weiß von Evonik, vermischt. Zusätzlich werden dabei als Rieselhilfsmittel 0,05 % (Massenanteil des Rieselhilfsmittels an der Masse der Gesamtmischung) AEROXIDE^{®} Alu C zugegeben. Die Mischung erfolgt bei Raumtemperatur in einem Labormischer Lab CM 12-MB unter Verwendung kurzer Mischwerkzeuge und der einer Mischabfolge von 2 Minuten bei 300 U/min und anschließend 1 Minute bei 500 U/min. Die erhaltenen Mischungen werden zur Entfernung von Agglomeraten und Verunreinigungen mit einem Laborsieb, Maschenweite 250 µm gesiebt.

Die entsprechende Mischung mit dem Flammschutzmittel F1 wird im Folgenden als M1, mit dem Flammschutzmittel F2 als M2 und mit dem Flammschutzmittel F3 als M3 bezeichnet.

Als Referenz wird unter der Bezeichnung M0 das unadditivierte Polymerpulver VESTOSINT^{®} 1125 weiß aufgeführt. Eine Mischung aus FN mit dem Polyamidpulver wird im Rahmen dieses Beispiels nicht weiter betrachtet, da Vorversuche mit entsprechenden Mischungen gezeigt haben, dass dieses Pulver mit einem Laser-sinter-System EOS P 396 nicht dosierbar oder auftragbar ist. Zudem können die Mischungen M1 und M3 als nicht umfänglich erfindungsgemäße Beispiele herangezogen werden, da sie nicht alle bevorzugten Ausführungsführungsformen beinhalten.

Die Mischungen wurden entsprechend der oben beschriebenen Messmethoden ebenfalls analysiert. Die Analysedaten sind in Tabelle 2 dargestellt.

**Tabelle 2: Mischungen**

| | Laserbeugung | | | | Schüttdichte | Rieselfähigkeit |
|---|---|---|---|---|---|---|
| | x<10 µm [%] | D10 [µm] | D50 [µm] | D90 [µm] | [kg/m³] | [s] |
| **M0** | 3,6 | 34,5 | 57,0 | 84,8 | 451 | nicht fließfähig |
| **M1** | 6,8 | 18,4 | 51,5 | 80,2 | 500 | 34 |
| **M2** | 5,0 | 26,4 | 52,7 | 80,5 | 504 | 27 |
| **M3** | 8,4 | 12,3 | 51,9 | 82,2 | 503 | 70 |

Auffällig ist insbesondere die erhöhte Ausflussdauer bei der Bestimmung der Rieselfähigkeit für M3, welches den höchsten Feinanteil enthält. Dies belegt ein schlechteres Fließverhalten des Materials, welches sich bei der Verarbeitung der Pulvermischung in einem pulverbasierten Additiven Fertigungsverfahren negativ auf die Pulverzuführung, Dosierung und den Auftrag des Pulvers auswirkt.

Die Mischung M1, M2 und M3 werden auf einem modifizierten Laser-Sinter-System EOS P 396 verarbeitet. Die Modifizierungen beschränken sich dabei auf ein reduziertes Bauvolumen auf einen Bauraum von 125 mm x 110 mm x 85 mm, mittig im ursprünglichen Baufeld angebracht. Dementsprechend sind die Heizelemente angepasst für eine gleichmäßige Temperaturverteilung im Baufeld angepasst. Die Dosierbehälter und der Beschichter mit Dachklinge (EOS Klinge III) erhaltenen einen entsprechenden Einsatz, so dass nur im entsprechenden Baufeld Pulver aufgebracht wird. Die Verarbeitung erfolgt bei einer Schichtdicke von 120 µm und einem Belichtungsparameter mit einem volumenbezogenen Energieeintrag von 0,26 J/mm³, aufgeteilt in zwei Belichtungen mit halben Energieeintrag je Belichtung, wobei die eingesetzte Laserleistung 18,5 W und die Scangeschwindigkeit 6 m/s beträgt. Die Prozesskammer-Temperatur beträgt 179 °C (gemessen durch das modifizierte Temperaturmess-System, eine typische Abweichung von etwa 10 °C gegenüber nicht modifizierten Systemen wurde beobachtet), die Entnahmekammer-Temperatur beträgt 150 °C. Zur Ermittlung der mechanischen Eigenschaften werden in horizontaler Bauteilorientierung (XYZ) Zugstäbe des Typs 1BA entsprechend ISO 527-2 mit einer nominellen Dicke von 2,5 mm gefertigt. In vertikaler Bauteilorientierung (ZXY) werden Zugstäbe des Typs A23 entsprechend ISO 20753 mit einer nominellen Dicke von 2,0 mm gefertigt. Die so gefertigten Probekörper werden auf einer Zugprüfmaschine Zwick/Roell Z005 mit Extensiometern geprüft.

Die ermittelten Kennwerte sind in Tabelle 3 aufgeführt.

**Tabelle 3: Mechanische Eigenschaften**

| | XYZ-Bauteilorientierung | | | ZXY-Bauteilorientierung | | |
|---|---|---|---|---|---|---|
| | E-Modul | Zugfes- tigkeit | Bruchdehnung | E-Modul | Zugfes- tigkeit | Bruchdehnung |
| | [MPa] | [MPa] | [%] | [MPa] | [MPa] | [%] |
| **M1** | 1.755 | 23,3 | 5,1 | 1.762 | 23,2 | 4,0 |
| **M2** | 1.847 | 23,6 | 4,8 | 1.710 | 23,6 | 5,9 |
| **M3** | 1.600 | 22,2 | 4,2 | 1.597 | 23,2 | 3,5 |

Insbesondere für Bauteile in ZXY-Bauteilorientierung wird deutlich, dass ausschließlich das Material M2 eine hohe Bruchdehnung erzielen kann. Durch ein verschlechtertes Pulverauftrags-Verhalten der anderen Pulver und durch eine teilweise Verschlechterung des Verfließens der geschmolzenen Polymerpartikel durch eine abschirmende Wirkung der feinen Flammschutzmittel-Partikel wird die Koaleszenz der Schmelze insbesondere auch zwischen den Schichten vermindert. Daraus resultierend sind insbesondere auch die insgesamt verringerten mechanischen Eigenschaften der Probekörper aus M3 abzuleiten.

## Patentansprüche

1. Mischung, umfassend mindestens ein polymerbasiertes Material in Pulverform und mindestens ein halogenfreies Flammschutzmittel in Pulverform, **dadurch gekennzeichnet, dass** das Flammschutzmittel in Pulverform eine Partikelgrößenverteilung, wobei die Partikelgrößenverteilung mittels Laserbeugung gemäß ISO 13320:2020 bestimmt wird, mit einem d50 im Bereich von 20 bis 80 µm, bevorzugt von mindestens 30 und/oder höchstens 60 µm, und einem d10 von größer als 10 µm, bevorzugt größer als 15 µm, noch mehr bevorzugt größer als 20 µm aufweist.

2. Mischung gemäß Anspruch 1, **dadurch gekennzeichnet, dass** das Flammschutzmittel in Pulverform einen Feinanteil, ermittelt als Mengenanteil von Partikeln mit einer Partikelgröße von kleiner als 10 µm, von weniger als 10 %, bevorzugt weniger als 8 %, insbesondere bevorzugt weniger als 5 % aufweist.

3. Mischung gemäß einem der vorhergehenden Ansprüche, **dadurch gekennzeichnet, dass** das Flammschutzmittel in Pulverform eine Partikelgrößenverteilung mit einem d90 von kleiner als 100 µm, bevorzugt kleiner als 80 µm aufweist.

4. Mischung gemäß einem der vorhergehenden Ansprüche, **dadurch gekennzeichnet, dass** das Flammschutzmittel in Pulverform ein phosphorbasiertes Flammschutzmittel, insbesondere ein phosphinhaltiges, phosphinoxidhaltiges, phospinathaltiges, phosphonathaltiges, phosphithaltiges, phosphathaltiges, phosphoniumhaltiges und/oder polyphosphathaltiges Flammschutzmittel und/oder ein Flammschutzmittel auf Basis von elementarem roten Phosphor, und/oder dass das Flammschutzmittel in Pulverform ein stickstoffbasiertes Flammschutzmittel, insbesondere Melamine oder Isocyanurate, besonders bevorzugt Melamincyanurat, umfasst.

5. Mischung gemäß Anspruch 4, **dadurch gekennzeichnet, dass** das Flammschutzmittel in Pulverform ein phosphinathaltiges Flammschutzmittel in Pulverform, insbesondere umfassend eine Verbindung der allgemeinen Formel I 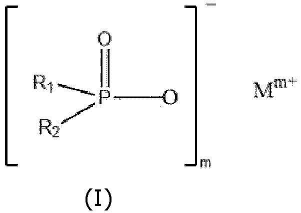 umfasst, wobei
R₁ und R₂ unabhängig voneinander ein linearer und/oder verzweigter C₁-C₆-AlkylRest, vorzugsweise ein Ethyl-Rest, und/oder ein Aryl-Rest sind, und
M ein Alkalimetall, ein Erdalkalimetall, ein Übergangsmetall ein Metall und/oder
eine protonierte Stickstoffbase, vorzugsweise ausgewählt aus Mg, Ca, Al, Sb, Sn, Ge, Ti, Fe, Zr, Ce, Bi, Sr, Mn, Li, Na, K und/oder Ammonium, insbesondere Al, ist, und/oder **dadurch gekennzeichnet, dass**
das Flammschutzmittel in Pulverform ein polyphosphathaltiges Flammschutzmittel in Pulverform, insbesondere ein Ammoniumpolyphosphat,
umfasst.

6. Mischung gemäß einem der vorhergehenden Ansprüche, **dadurch gekennzeichnet, dass** das Flammschutzmittel in Pulverform an sich agglomeriert ist und/oder an ein polymeres Material agglomeriert ist.

7. Mischung gemäß einem der vorhergehenden Ansprüche, **dadurch gekennzeichnet, dass** das mindestens eine polymerbasierte Material mindestens ein thermoplastisches Polymer umfasst, wobei das thermoplastische Polymer vorzugsweise ausgewählt ist aus der Gruppe, umfassend Polyetherimide, Polycarbonate, Polyphenylensulfone, Polyphenylenoxide, Polyethersulfone, Acrylnitril-Butadien-Styrol-Copolymerisate (ABS), Acrylnitril-Styrol-Acrylat-Copolymerisate (ASA), Polyvinylchlorid, Polyacrylate, Polyester, Polyamide, Polyaryletherketone (PAEKs), Polyether, Polyurethane, Polyimide, Polyamidimide, Polysiloxane, Polyolefine sowie Copolymeren, welche mindestens zwei verschiedene Wiederholungseinheiten der vorgenannten Polymere aufweisen, und/oder mindestens ein Polyblend auf der Basis von mindestens zwei der vorgenannten Polymere und/oder Copolymere, wobei das mindestens eine thermoplastische Polymer vorzugsweise ein Polyamid, insbesondere PA6, PA6.6, PA11, PA12, PA6.13, PA10.12, PA5, PA5.10, ein Polypropylen-Polyethylen-Copolymer, ein thermoplastisches Polyurethan und/oder ein thermoplastisches Polyamid-Elastomer, umfasst.

8. Verfahren zur Herstellung einer Mischung gemäß irgendeinem der Ansprüche 1 bis 7, umfassend das Einstellen einer konkreten Partikelgrößenverteilung mit einem d50 im Bereich von 20 bis 80 µm, bevorzugt von mindestens 30 und/oder höchstens 60 µm, und einem d10 von größer als 10 µm, bevorzugt größer als 15 µm, noch mehr bevorzugt größer als 20 µm in dem Flammschutzmittel in Pulverform und das Mischen dieses Flammschutzmittels in Pulverform mit mindestens einem polymerbasierten Material in Pulverform.

9. Verfahren gemäß Anspruch 8, **dadurch gekennzeichnet, dass** das Einstellen der konkreten Partikelgrößenverteilung in dem Flammschutzmittel in Pulverform das Entfernen von Partikeln, insbesondere durch Klassieren, vorzugsweise durch Sieben, Luftstrahlsiebung und/oder Sichten, umfasst.

10. Verfahren gemäß einem der Ansprüche 8 oder 9, **dadurch gekennzeichnet, dass** das das Einstellen der konkreten Partikelgrößenverteilung in dem Flammschutzmittel in Pulverform einen Schritt umfasst, wobei
- das Flammschutzmittels in Pulverform an sich selbst agglomeriert wird,
- das Flammschutzmittels in Pulverform an ein polymeres Material agglomeriert wird,
- das Flammschutzmittels in Pulverform durch Fällung oder Trocknung aus einer Dispersion oder Lösung agglomeriert wird, und/oder wobei
- das Flammschutzmittels in Pulverform zunächst mit mindestens einem polymeren Material compoundiert und anschließend auf die Zielpartikelgröße mikronisiert wird.

11. Dreidimensionales Objekt, hergestellt durch Verfestigung eines pulverförmigen Baumaterials an Raumpunkten, die dem Querschnitt des dreidimensionalen Objekts in der jeweiligen Schicht entsprechen, durch Bestrahlung, wobei eine Mischung gemäß irgendeinem der Ansprüche 1 bis 7 als Baumaterial verwendet wird.

12. Verfahren zur Herstellung eines dreidimensionalen Objekts, insbesondere durch Verfestigung eines pulverförmigen Baustoffs an den Punkten, die dem Querschnitt des dreidimensionalen Objekts in der jeweiligen Schicht entsprechen, wobei als Baustoff eine Mischung gemäß irgendeinem der Ansprüche 1 bis 7 verwendet wird und vorzugsweise der Baustoff durch Einwirkung von elektromagnetischer Strahlung, die von einer Strahlungsquelle ausgesandt wird, selektiv verfestigt wird.

13. System zur Herstellung von dreidimensionalen Objekten durch Verfestigung eines pulverförmigen Baustoffs an den dem Querschnitt des dreidimensionalen Objekts entsprechenden Stellen in der jeweiligen Schicht, wobei das System mindestens eine Strahlungsquelle, die zur Aussendung von elektromagnetischer Strahlung ausgebildet ist, eine als offener Behälter wirkende Prozesskammer, die mit einer Behälterwand ausgebildet ist einen in der Prozesskammer angeordneten Träger, wobei die Prozesskammer und der Träger in vertikaler Richtung relativ zueinander bewegbar sind, mit einem Vorratsbehälter und einem in horizontaler Richtung bewegbaren Beschichter, wobei der Vorratsbehälter zumindest teilweise mit einer Mischung gemäß irgendeinem der Ansprüche 1 bis 7 gefüllt ist.

14. Verfahren nach Anspruch 12 oder System nach Anspruch 13, wobei die Strahlungsquelle elektromagnetische Strahlung einer Wellenlänge im Bereich von 400 bis 1.500 nm, vorzugsweise in einem der Wellenlängenbereiche 1064±8 nm und/oder 980±7 nm und/oder 940±7 nm und/oder 810±7 nm und/oder 780±10 nm und/oder 640±7 nm, oder elektromagnetische Strahlung einer Wellenlänge von etwa 10,6 µm oder im Bereich von 4,8 bis 8,3 µm und vorzugsweise etwa 5 µm emittiert, wobei die Strahlungsquelle mindestens einen Laser, vorzugsweise mindestens einen Diodenlaser, umfasst.

15. Verwendung einer Mischung gemäß einem der Ansprüche 1 bis 7 als Baumaterial für die additive Fertigung eines dreidimensionalen Objekts durch selektive Verfestigung eines Baumaterials an den Querschnittspunkten des dreidimensionalen Objekts in den entsprechenden Schichten, insbesondere gemäß einem der Ansprüche 12 oder 14.

## Claims

1. Mixture, comprising at least one polymer-based material in powdered form and at least one halogen-free flame retardant in powdered form, **characterized in that** the flame retardant in powdered form has a particle size distribution, wherein the particle size distribution is determined by means of laser diffraction according to ISO 13320:2020, having a d50 in the range of 20 to 80 µm, preferably of at least 30 and/or at most 60 µm, and a d10 of greater than 10 µm, preferably greater than 15 µm, still more preferably greater than 20 µm.

2. Mixture as claimed in claim 1, **characterized in that** the flame retardant in powdered form has a fine component, determined as the proportion of particles having a particle size of less than 10 µm, of less than 10%, preferably less than 8%, in particular preferably less than 5%.

3. Mixture as claimed in any one of the preceding claims, **characterized in that** the flame retardant in powdered form has a particle size distribution having a d90 less than 100 µm, preferably less than 80 µm.

4. Mixture as claimed in any one of the preceding claims, **characterized in that** the flame retardant in powdered form comprises a phosphorus-based flame retardant, in particular a phosphine-containing, phosphine oxide-containing, phosphinate-containing, phosphonate-containing, phosphite-containing, phosphate-containing, phosphonium-containing, and/or polyphosphate-containing flame retardant and/or a flame retardant based on elemental red phosphorus and/or the flame retardant in powdered form comprises a nitrogen-based flame retardant, in particular melamine or isocyanurate, particularly preferably melamine cyanurate.

5. Mixture as claimed in claim 4, **characterized in that** the flame retardant in powdered form comprises a phosphinate-containing flame retardant in powdered form, in particular comprising a compound of the general formula I, 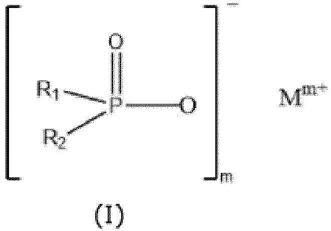 wherein
R₁ and R₂ are, independently of one another, a linear and/or branched C₁-C₆ alkyl radical, preferably an ethyl radical, and/or an aryl radical, and
M is an alkali metal, an alkaline earth metal, a transition metal, a metal, and/or a protonated nitrogen base, preferably selected from Mg, Ca, Al, Sb, Sn, Ge, Ti, Fe, Zr, Ce, Bi, Sr, Mn, Li, Na, K, and/or ammonium, in particular Al,
and/or **characterized in that**
the flame retardant in powdered form comprises a polyphosphate-containing flame retardant in powdered form, in particular an ammonium polyphosphate.

6. Mixture as claimed in any one of the preceding claims, **characterized in that** the flame retardant in powdered form is agglomerated on itself and/or is agglomerated on a polymer material.

7. Mixture as claimed in any one of the preceding claims, **characterized in that** the at least one polymer-based material comprises at least one thermoplastic polymer, wherein the thermoplastic polymer is preferably selected from the group comprising polyetherimides, polycarbonates, polyphenylene sulfones, polyphenylene oxides, polyether sulfones, acrylonitrile-butadiene-styrene copolymer (ABS), acrylonitrile-styrene-acrylate copolymer (ASA), polyvinyl chloride, polyacrylates, polyesters, polyamides, polyaryl ether ketones (PAEKs), polyethers, polyurethanes, polyimides, polyamide imides, polysiloxanes, polyolefins, as well as copolymers which have at least two different repetition units of the above-mentioned polymers, and/or at least one polyblend based on at least two of the above-mentioned polymers and/or copolymers, wherein the at least one thermoplastic polymer preferably comprises a polyamide, in particular PA6, PA6.6, PA11, PA12, PA6.13, PA10.12, PA5, PA5.10, a polypropylene-polyethylene copolymer, a thermoplastic polyurethane, and/or a thermoplastic polyamide elastomer.

8. Method for producing a mixture as claimed in any one of claims 1 to 7, comprising setting a specific particle size distribution having a d50 in the range of 20 to 80 µm, preferably of at least 30 and/or at most 60 µm, and a d10 of greater than 10 µm, preferably greater than 15 µm, still more preferably greater than 20 µm in the flame retardant in powdered form and mixing the flame retardant in powdered form with the at least one polymer-based material in powdered form.

9. Method as claimed in claim 8, **characterized in that** setting the specific particle size distribution in the flame retardant in powdered form comprises removing particles, in particular by classifying, preferably by sieving, air jet sieving, and/or sifting.

10. Method as claimed in one of claims 8 or 9, **characterized in that** setting the specific particle size distribution in the flame retardant in powdered form comprises a step, wherein
- the flame retardant in powdered form is agglomerated on itself,
- the flame retardant in powdered form is agglomerated on a polymer material,
- the flame retardant in powdered form is agglomerated by precipitation or drying from a dispersion or solution, and/or wherein
- the flame retardant in powdered form is initially compounded with the at least one polymer material and then micronized to the target particle size.

11. Three-dimensional object, produced by solidifying a powdered construction material at points in space which correspond to the cross section of the three-dimensional object in the respective layer by irradiation, wherein a mixture as claimed in any one of claims 1 to 7 is used as the construction material.

12. Method for producing a three-dimensional object, in particular by solidifying a powdered construction material at the points which correspond to the cross section of the three-dimensional object in the respective layer, wherein a mixture as claimed in any one of claims 1 to 7 is used as the construction material and the construction material is preferably selectively solidified by the effect of electromagnetic radiation emitted by a radiation source.

13. System for producing three-dimensional objects by solidifying a powdered construction material at the points corresponding to the cross section of the three-dimensional object in the respective layer, wherein the system comprises at least one radiation source designed to emit electromagnetic radiation, a process chamber acting as an open container, which is formed having a container wall, and a carrier arranged in the process chamber, wherein the process chamber and the carrier are movable relative to one another in the vertical direction, having a storage container and a coater movable in the horizontal direction, wherein the storage container is at least partially filled with a mixture as claimed in any one of claims 1 to 7.

14. Method as claimed in claim 12 or system as claimed in claim 13, wherein the radiation source emits electromagnetic radiation of a wavelength in the range of 400 to 1500 nm, preferably in one of the wavelength ranges 1064 ± 8 nm and/or 980 ± 7 nm and/or 940 ± 7 nm and/or 810 ± 7 nm and/or 780 ± 10 nm and/or 640 ± 7 nm, or electromagnetic radiation of a wavelength of approximately 10.6 µm or in the range of 4.8 to 8.3 µm and preferably approximately 5 µm, wherein the radiation source comprises at least one laser, preferably at least one diode laser.

15. Use of a mixture as claimed in any one of claims 1 to 7 as a construction material for the additive manufacturing of a three-dimensional object by selective solidification of a construction material at the cross-sectional points of the three-dimensional object in the corresponding layers, in particular as claimed in either one of claims 12 or 14.

## Revendications

1. Mélange contenant au moins un matériau à base de polymère pulvérulent et au moins un agent ignifuge sans halogènes pulvérulent, **caractérisé en ce que** l'agent ignifuge pulvérulent présente une répartition granulométrique, laquelle répartition granulométrique est déterminée par diffraction laser selon ISO 13320:2020, avec un d50 compris entre 20 et 80 µm, de préférence d'au moins 30 et/ou au maximum de 60 µm, et un d10 supérieur à 10 µm, de préférence supérieur à 15 µm, mieux encore supérieur à 20 µm.

2. Mélange selon la revendication 1, **caractérisé en ce que** l'agent ignifuge pulvérulent présente une proportion de particules fines, déterminée comme la proportion de particules ayant une taille de particules inférieure à 10 µm, de moins de 10 %, de préférence moins de 8 %, en particulier moins de 5 %.

3. Mélange selon l'une des revendications précédentes, **caractérisé en ce que** l'agent ignifuge pulvérulent présente une répartition granulométrique avec un d90 inférieur à 100 µm, de préférence inférieur à 80 µm.

4. Mélange selon l'une des revendications précédentes, **caractérisé en ce que** l'agent ignifuge pulvérulent est un agent ignifuge à base de phosphore, en particulier un agent ignifuge contenant de la phosphine, de l'oxyde de phosphine, du phosphinate, du phosphonate, de la phosphite, du phosphate, du phosphonium et/ou du polyphosphate, et/ou un agent ignifuge à base de phosphore rouge élémentaire, et/ou **en ce que** l'agent ignifuge pulvérulent contient un agent ignifuge à base d'azote, en particulier des mélamines ou des isocyanurates, de préférence, tout particulièrement, du cyanurate de mélamine.

5. Mélange selon la revendication 4, **caractérisé en ce que** l'agent ignifuge pulvérulent contient un agent ignifuge contenant du phosphinate, comprenant en particulier un composé selon la formule générale I, 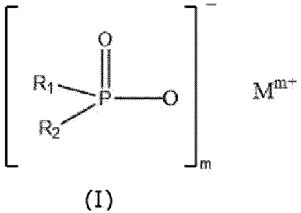 où
R₁ et R₂ sont, indépendamment l'un de l'autre, un radical alkyle en C₁-C₆ linéaire et/ou ramifié, de préférence un radical éthyle, et/ou est un radical aryle, et
M est un métal alcalin, un métal alcalino-terreux, un métal de transition, un métal et/ou une base azotée protonée, de préférence choisis parmi Mg, Ca, Al, Sb, Sn, Ge, Ti, Fe, Zr, Ce, Bi, Sr, Mn, Li, Na, K et/ou l'ammonium, en particulier Al, et/ou **caractérisé en ce que**
l'agent ignifuge pulvérulent contient un agent ignifuge pulvérulent contenant un polyphosphate, en particulier un polyphosphate d'ammonium.

6. Mélange selon l'une des revendications précédentes, **caractérisé en ce que** l'agent ignifuge pulvérulent est aggloméré sur lui-même et/ou aggloméré sur un matériau polymère.

7. Mélange selon l'une des revendications précédentes, **caractérisé en ce que** l'au moins un matériau à base de polymère comprend au moins un polymère thermoplastique, lequel polymère thermoplastique est de préférence choisi dans le groupe comprenant des polyétherimides, des polycarbonates, des polyphénylènesulfones, des oxydes de polyphénylène, des polyéthersulfones, des copolymères acrylonitrile-butadiène-styrène (ABS), des copolymères acrylonitrile-styrène-acrylate (ASA), le chlorure de polyvinyle, des polyacrylates, des polyesters, des polyamides, des polyaryléthercétones (PAEK), des polyéthers, des polyuréthanes, des polyimides, des polyamidimides, des polysiloxanes, des polyoléfines ainsi que des copolymères présentant au moins deux motifs de répétition différents des polymères précités, et/ou au moins un mélange polymère à base d'au moins deux des polymères et/ou copolymères précités, l'au moins un polymère thermoplastique comprenant de préférence un polyamide, en particulier du PA6, du PA6.6, du PA11, du PA12, du PA6.13, du PA10.12, du PA5, du PA5.10, un copolymère de polypropylène et de polyéthylène, un polyuréthane thermoplastique et/ou un élastomère de polyamide thermoplastique.

8. Procédé de fabrication d'un mélange selon l'une quelconque des revendications 1 à 7, comprenant l'ajustement d'une répartition granulométrique concrète à un d50 compris entre 20 et 80 µm, de préférence d'au moins 30 et/ou au maximum de 60 µm, et un d10 de plus de 10 µm, de préférence plus de 15 µm, mieux encore plus de 20 µm, dans l'agent ignifuge pulvérulent et le mélange de cet agent ignifuge pulvérulent avec au moins un matériau à base de polymère pulvérulent.

9. Procédé selon la revendication 8, **caractérisé en ce que** l'ajustement de la répartition granulométrique concrète dans l'agent ignifuge pulvérulent comprend le retrait de particules, en particulier par calibrage, de préférence par tamisage, tamisage par jet d'air et/ou criblage.

10. Procédé selon l'une des revendications 8 ou 9, **caractérisé en ce que** l'ajustement de la répartition granulométrique concrète dans l'agent ignifuge pulvérulent comprend une étape dans laquelle
- l'agent ignifuge pulvérulent est aggloméré sur lui-même,
- l'agent ignifuge pulvérulent est aggloméré sur un matériau polymère,
- l'agent ignifuge pulvérulent est aggloméré par précipitation ou séchage à partir d'une dispersion ou d'une solution, et/ou dans lequel
- l'agent ignifuge pulvérulent est d'abord mélangé avec au moins un matériau polymère puis micronisé à la taille de particules souhaitée.

11. Objet tridimensionnel fabriqué par solidification d'un matériau de construction pulvérulent en des points de l'espace correspondant à la section de l'objet tridimensionnel dans la couche en question par irradiation, en utilisant un mélange selon l'une quelconque des revendications 1 à 7 comme matériau de construction.

12. Procédé de fabrication d'un objet tridimensionnel, en particulier par solidification d'un matériau de construction pulvérulent en des points de l'espace correspondant à la section de l'objet tridimensionnel dans la couche en question, dans lequel le matériau de construction utilisé est un mélange selon l'une quelconque des revendications 1 à 7 et le matériau de construction est de préférence solidifié sélectivement par l'action d'un rayonnement électromagnétique émis par une source de rayonnement.

13. Système pour la fabrication d'objets tridimensionnels par solidification d'un matériau de construction pulvérulent en des points de l'espace correspondant à la section de l'objet tridimensionnel dans la couche en question, lequel système [comprend] au moins une source de rayonnement conçue pour émettre un rayonnement électromagnétique, une chambre de traitement faisant office de cuve ouverte qui est munie d'une paroi de cuve et un support disposé dans la chambre de traitement, la chambre de traitement et le support pouvant être déplacés dans le sens vertical l'un par rapport à l'autre, avec un réservoir et un applicateur mobile dans le sens horizontal, lequel réservoir est au moins en partie rempli d'un mélange selon l'une quelconque des revendications 1 à 7.

14. Procédé selon la revendication 12 ou système selon la revendication 13, dans lequel la source de rayonnement émet un rayonnement électromagnétique d'une longueur d'onde comprise entre 400 et 1500 nm, de préférence dans l'une des plages de longueur d'onde de 1064 ± 8 nm et/ou 980 ± 7 nm et/ou 940 ± 7 nm et/ou 810 ± 7 nm et/ou 780 ± 10 nm et/ou 640 ± 7 nm, ou un rayonnement électromagnétique d'une longueur d'onde d'environ 10,6 µm ou comprise entre 4,8 et 8,3 µm et de préférence d'environ 5 µm, la source de rayonnement comprenant au moins un laser, de préférence un laser à diodes.

15. Utilisation d'un mélange selon l'une des revendications 1 à 7 comme matériau de construction pour la fabrication par addition de matière d'un objet tridimensionnel par la solidification sélective d'un matériau de construction dans les points de section de l'objet tridimensionnel dans les couches correspondantes, en particulier selon l'une des revendications 12 ou 14.
